(19) Europäisches Patentamt
European Patent Office
Office européen des brevets

(11) **EP 3 749 948 B1**

(12) **FASCICULE DE BREVET EUROPEEN**

(45) Date de publication et mention
de la délivrance du brevet:
**07.06.2023 Bulletin 2023/23**

(21) Numéro de dépôt: **19707861.1**

(22) Date de dépôt: **01.02.2019**

(51) Classification Internationale des Brevets (IPC):
*G01N 21/27* (2006.01)    *G01N 21/31* (2006.01)
*G01J 3/28* (2006.01)    *G01J 3/42* (2006.01)
*G01J 3/427* (2006.01)    *G01N 21/3504* (2014.01)
*G01N 21/61* (2006.01)

(52) Classification Coopérative des Brevets (CPC):
**G01N 21/314; G01J 3/28; G01J 3/42; G01J 3/427;
G01N 21/274;** G01N 21/3504; G01N 21/61;
G01N 2021/3166; G01N 2021/3177

(86) Numéro de dépôt international:
**PCT/FR2019/050230**

(87) Numéro de publication internationale:
**WO 2019/150053 (08.08.2019 Gazette 2019/32)**

(54) **PROCÉDÉ ET DISPOSITIF D'ANALYSE D'UN GAZ PAR UNE DOUBLE ILLUMINATION**

VERFAHREN UND VORRICHTUNG ZUR ANALYSE EINES GASES MITTELS
DOPPELBELEUCHTUNG

METHOD AND DEVICE FOR ANALYSING A GAS BY MEANS OF DOUBLE ILLUMINATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.02.2018 FR 1850956**

(43) Date de publication de la demande:
**16.12.2020 Bulletin 2020/51**

(73) Titulaire: **Elichens
38040 Grenoble (FR)**

(72) Inventeur: **LE, Thanh Trung
38000 GRENOBLE (FR)**

(74) Mandataire: **INNOV-GROUP
310, avenue Berthelot
69372 Lyon Cedex 08 (FR)**

(56) Documents cités:
**FR-A1- 3 000 548**

**Description**

**DOMAINE TECHNIQUE**

Le domaine technique de l'invention est un procédé optique d'analyse d'un gaz, en mettant en oeuvre une source de lumière de type corps noir ou corps gris et en mesurant une absorption d'une onde lumineuse émise par la source de lumière.

**ART ANTERIEUR**

Le recours à des méthodes optiques pour l'analyse d'un gaz est fréquent. Des capteurs permettent de déterminer la composition d'un gaz en se basant sur le fait que les espèces composant le gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer-Lambert. Ce principe permet une estimation de la concentration d'une espèce gazeuse présente dans le gaz.
Selon les procédés les plus courants, le gaz analysé s'étend entre une source de lumière et un photodétecteur, dit photodétecteur de mesure, ce dernier étant destiné à mesurer une onde lumineuse transmise par le gaz à analyser, l'onde lumineuse étant partiellement absorbée par ce dernier. La source de lumière est usuellement une source émettant dans l'infrarouge, la méthode utilisée étant usuellement désignée par le terme anglosaxon "NDIR détection", l'acronyme NDIR signifiant Non Dispersive Infra-Red. Un tel principe a été fréquemment mis en oeuvre, et est par exemple décrit dans les documents US 5,026,992 A ou WO 2007/064370 A2.
Les procédés usuels comprennent généralement une mesure d'une onde lumineuse, dite onde lumineuse de référence, émise par la source, l'onde lumineuse de référence étant non absorbée, ou absorbée de façon négligeable, par le gaz analysé. La mesure de l'onde lumineuse de référence permet d'estimer l'intensité de l'onde lumineuse émise par la source, ou d'estimer l'onde lumineuse qui serait détectée par le photodétecteur de mesure en l'absence d'absorption par le gaz analysé. Cette technologie est désignée par le terme "double beam". La comparaison entre l'onde lumineuse en présence de gaz et l'onde lumineuse sans gaz permet de caractériser l'absorption du gaz. Il s'agit par exemple de déterminer une quantité d'une espèce gazeuse dans le gaz, selon la technologie désignée par le terme "NDIR par absorption".
L'onde lumineuse de référence est mesurée par un photodétecteur de référence. Il peut s'agir d'un photodétecteur de référence différent du photodétecteur de mesure, et agencé de façon à être disposé face à la source de lumière, le photodétecteur de référence étant associé à un filtre optique de référence. Le filtre optique de référence définit une bande spectrale de référence, dans laquelle le gaz à analyser ne présente pas d'absorption significative.
Selon une approche, décrite dans US 2011/0042570 A1, on utilise un photodétecteur de mesure et un photodétecteur de référence, les deux photodétecteurs détectant une onde lumineuse dans une même bande spectrale, en l'occurrence une bande spectrale d'absorption du $CO_2$. Le photodétecteur de référence est disposé plus proche de la source de lumière que le photodétecteur de mesure. La comparaison des signaux respectivement mesurés par le photodétecteur de mesure et le photodétecteur de référence permet de s'affranchir de la connaissance de l'intensité de l'onde lumineuse émise par la source.
Le document FR 3 000 548 A1 décrit un capteur de $CO_2$ comportant une voie de mesure, dans une bande spectrale infrarouge, et une voie de référence, dans une bande spectrale visible (0.4 $\mu$m à 0.8 $\mu$m). La voie de référence est considérée comme non influencée par la concentration en $CO_2$ dans le gaz mesuré. Afin de tenir compte de l'évolution du spectre d'émission de la source de lumière, ce document décrit le recours à une fonction F, représentative du vieillissement de la source de lumière respectivement dans les bandes spectrales visible et infra-rouge. La fonction F est approximée par une fonction identité : ainsi, le vieillissement de la source de lumière dans l'infrarouge est considéré comme égal au vieillissement de la source de lumière dans le visible.
L'inventeur a constaté que le recours à une onde lumineuse de référence peut présenter certains inconvénients. Il propose un procédé permettant de surmonter ces inconvénients, de façon à améliorer la précision de la mesure.

**EXPOSE DE L'INVENTION**

Un premier objet de l'invention est un procédé de mesure d'une quantité d'une espèce gazeuse présente dans un gaz, l'espèce gazeuse étant apte à absorber une lumière dans une bande spectrale d'absorption, le procédé comportant les étapes suivantes :

a) disposition du gaz entre une source de lumière et un photodétecteur de mesure, la source de lumière étant apte à émettre une onde lumineuse incidente, l'onde lumineuse incidente se propageant à travers le gaz vers le photodétecteur de mesure, le photodétecteur de mesure étant apte à détecter une onde lumineuse transmise par le gaz, dans la bande spectrale d'absorption ;

b) illumination du gaz par la source de lumière ;

c) mesure, par le photodétecteur de mesure, d'une intensité, dite intensité de mesure, de l'onde lumineuse transmise par le gaz, dans une bande spectrale de mesure, comportant la bande spectrale d'absorption;

d) mesure, par un photodétecteur de référence, d'une intensité, dite intensité de référence, d'une onde lumineuse dite de référence, l'onde lumineuse de référence étant émise par la source de lumière dans une bande spectrale de référence;

les étapes b) à d) étant mises en oeuvre à une pluralité d'instants de mesure, le procédé comportant, à chaque instant de mesure :

e) à partir de l'intensité de référence mesurée par le photodétecteur de référence, et de l'intensité de mesure mesurée par le photodétecteur de mesure, estimation d'une absorption de l'onde lumineuse incidente par le gaz ;

f) estimation d'une quantité de l'espèce gazeuse, à partir de l'absorption estimée lors de l'étape e) ;

le procédé étant caractérisé en ce que l'étape e) comporte une prise en compte d'une fonction de correction, représentative d'une variation temporelle d'une intensité de l'onde lumineuse incidente dans la bande spectrale de mesure relativement à une intensité de l'onde lumineuse incidente dans la bande spectrale de référence.

La source de lumière peut comporter un filament porté à une température permettant une émission de lumière dans la bande spectrale d'illumination.

La fonction de correction peut être représentative d'une comparaison entre :

- l'intensité de l'onde lumineuse incidente, dans la bande spectrale de mesure;
- l'intensité de l'onde lumineuse incidente, dans la bande spectrale de référence;

la comparaison prenant des valeurs différentes à différents instants de mesure.

La comparaison peut être exprimée sous la forme d'un ratio ou d'une soustraction.

La fonction de correction est de préférence préalablement établie au cours d'une phase de calibration, comportant les étapes suivantes :

cal-i) disposition d'une source de lumière de test, face à un photodétecteur de mesure de test, et face à un photodétecteur de référence de test, la source de lumière de test, le photodétecteur de mesure de test et le photodétecteur de référence de test étant respectivement représentatifs de la source de lumière, du photodétecteur de mesure et du photodétecteur de référence ;

cal-ii) illumination du photodétecteur de mesure de test et du photodétecteur de référence de test par la source de lumière de test, durant des instants de calibration s'étendant selon une période de calibration ;

cal-iii) comparaison d'une évolution temporelle de l'intensité détectée par le photodétecteur de mesure de test, dans la bande spectrale de mesure, avec une évolution temporelle de l'intensité détectée par le photodétecteur de référence de test, dans la bande spectrale de référence.

La source de lumière de test peut être impulsionnelle, à chaque impulsion correspondant un instant de calibration. La période de calibration peut comporter au moins 1000 instants de calibration.

La fonction de correction peut être établie à partir d'une comparaison, en différents instants de calibration, entre:

- l'intensité détectée par le photodétecteur de mesure de test, normalisée par une intensité initiale détectée par le photodétecteur de mesure de test;
- l'intensité détectée par le photodétecteur de référence de test, normalisée par une intensité initiale détectée par le photodétecteur de référence de test.

Par intensité initiale, on entend une intensité mesurée à un instant initial de la période de calibration.

L'étape e) peut comporter, à partir de l'intensité de référence mesurée à l'instant de mesure et de la fonction de correction, une estimation d'une intensité qui serait détectée, à l'instant de mesure, par le photodétecteur de mesure, dans la bande spectrale de mesure, en l'absence de gaz. Elle peut comporter, à partir de l'intensité de référence mesurée à l'instant de mesure et de la fonction de correction, une correction de l'intensité de mesure, l'intensité de mesure corrigée correspondant à une intensité de mesure en l'absence de vieillissement de la source de lumière.

Un deuxième objet de l'invention est un dispositif pour déterminer une quantité d'une espèce gazeuse dans un gaz, le dispositif comportant :

- une source lumineuse configurée pour émettre une onde lumineuse incidente se propageant vers le gaz, l'onde lumineuse incidente s'étendant dans une bande spectrale d'absorption de l'espèce gazeuse;
- un photodétecteur de mesure, apte à détecter une onde lumineuse transmise par le gaz, à différents instants de mesure, dans une bande spectrale de mesure et à en mesurer une intensité, dite intensité de mesure;
- un photodétecteur de référence, configuré pour mesurer une intensité, dite intensité de référence, d'une onde lumineuse de référence émise par la source de lumière, dans une bande spectrale de référence, aux différents instants de mesure;
- un processeur, programmé pour mettre en oeuvre les étapes e) et f) d'un procédé selon le premier objet de l'invention, à partir de l'intensité de référence et de l'intensité de mesure. D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A représente un exemple de dispositif permettant la mise en oeuvre de l'invention. La figure 1B schématise un spectre d'émission d'une source de lumière de type corps noir.

La figure 2A montre la décroissance observée de l'intensité lumineuse émise par une source de lumière dans deux bandes spectrales différentes.

La figure 2B illustre la perte d'émissivité de la source de lumière dans une bande spectrale de mesure en fonction de la perte d'émissivité de la source de lumière dans une bande spectrale de référence.

La figure 2C illustre la perte d'émissivité de la source de lumière dans une bande spectrale de mesure en fonction de la perte d'émissivité de la source de lumière dans une bande spectrale de référence, et cela en considérant trois tensions d'alimentation différentes de la source de lumière.

La figure 3 montre une prise en compte de l'intensité de référence pour corriger la perte d'émissivité de la source de lumière respectivement selon un procédé usuel et selon l'invention.

La figure 4 représente les principales étapes d'un procédé mettant en oeuvre l'invention.

## EXPOSE DE MODES DE REALISATION PARTICULIERS

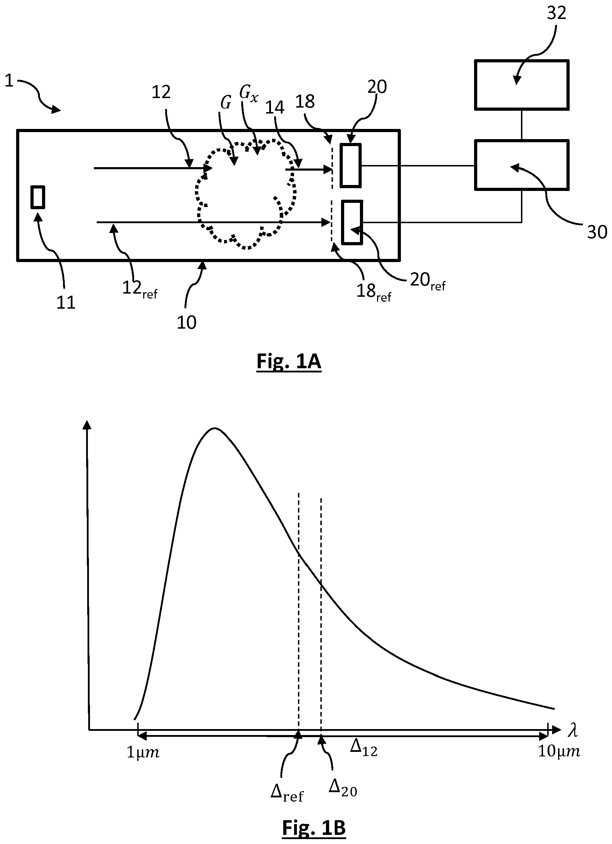

La figure 1A est un exemple d'un dispositif d'analyse 1 de gaz. Ce dispositif comporte une enceinte 10 définissant un espace interne à l'intérieur duquel se trouvent :

- une source de lumière 11, apte à émettre une onde lumineuse 12, dite onde lumineuse incidente, de façon à illuminer un gaz G s'étendant dans l'espace interne. L'onde lumineuse incidente 12 s'étend selon une bande spectrale d'illumination $\Delta_{12}$.
- Un photodétecteur 20, dit photodétecteur de mesure, configuré pour détecter une onde lumineuse 14 transmise par le gaz $G$, sous l'effet de l'illumination de ce dernier par l'onde lumineuse incidente 12. L'onde lumineuse 14 est désignée par le terme onde lumineuse de mesure. Elle est détectée, par le photodétecteur de mesure 20, dans une bande spectrale de mesure $\Delta_{20}$.
- Un photodétecteur de référence $20_{ref}$, configuré pour détecter une onde lumineuse $12_{ref}$, dite de référence dans une bande spectrale de référence $\Delta_{ref}$. La bande spectrale de référence $\Delta_{ref}$ est une bande spectrale dans laquelle on considère que l'absorption de l'onde lumineuse 12 par le gaz $G$ est négligeable.

La bande spectrale de référence $\Delta_{ref}$ est différente de la bande spectrale de mesure $\Delta_{20}$. La bande spectrale de mesure $\Delta_{20}$ peut notamment être plus large que la bande spectrale de référence $\Delta_{ref}$. La bande spectrale de mesure $\Delta_{20}$ peut comprendre la bande spectrale de référence $\Delta_{ref}$.

Le gaz $G$ comporte une espèce gazeuse $G_x$ dont on cherche à déterminer une quantité $c_x(k)$, par exemple une concentration, à un instant de mesure $k$. Cette espèce gazeuse absorbe une part mesurable de la lumière dans une bande spectrale d'absorption $\Delta_x$.

La source de lumière 11 est apte à émettre l'onde lumineuse incidente 12, selon la bande spectrale d'illumination $\Delta_{12}$, cette dernière pouvant s'étendre entre le proche ultraviolet et l'infrarouge moyen, par exemple entre 200 nm et 10 $\mu$m, et le plus souvent entre 1 $\mu$m et 10 $\mu$m. La bande spectrale d'absorption $\Delta_x$ de l'espèce gazeuse $G_x$ analysée est comprise dans la bande spectrale d'illumination $\Delta_{12}$. La source de lumière 11 peut notamment être impulsionnelle, l'onde lumineuse incidente 12 étant une impulsion de durée généralement comprise entre 100 ms et 1 s. La source de lumière 11 peut notamment être une source de lumière de type filament suspendu et chauffé à une température comprise entre 400°C et 800°C. Son spectre d'émission, dans la bande spectrale d'émission $\Delta_{12}$, correspond au spectre d'émission d'un corps noir.

Le photodétecteur de mesure 20 est de préférence associé à un filtre optique 18, définissant la bande spectrale de mesure $\Delta_{20}$ englobant tout ou partie de la bande spectrale d'absorption $\Delta_x$ de l'espèce gazeuse.

Dans l'exemple considéré, le photodétecteur de mesure 20 est une thermopile, apte à délivrer un signal dépendant de l'intensité de l'onde lumineuse détectée. De façon alternative, le photodétecteur de mesure peut être une photodiode ou un autre type de photodétecteur.

Le photodétecteur de référence $20_{ref}$ est disposé à côté du photodétecteur de mesure 20 et est de même type que ce dernier. Il est associé à un filtre optique, dit filtre optique de référence $18_{ref}$. Le filtre optique de référence $18_{ref}$ définit la bande spectrale de référence $\Delta_{ref}$ correspondant à une plage de longueurs d'onde non absorbées par l'espèce gazeuse considérée. La bande passante de référence $\Delta_{ref}$ est par exemple centrée autour de la longueur d'onde 3.91 $\mu$m.

L'intensité $I(k)$ de l'onde lumineuse 14 détectée par le photodétecteur de mesure 20, dite intensité de mesure, à un instant de mesure $k$, dépend de la quantité $c_x(k)$ à l'instant de mesure, selon la relation de Beer-Lambert :

$$abs(k) = 1 - \frac{I(k)}{I_0(k)} = 1 - e^{-\mu(c_x(k))l} \quad (1)$$

où :

- $\mu(c_x(k))$ est un coefficient d'absorption, dépendant de la quantité $c_x(k)$ à l'instant $k$;
- $l$ est l'épaisseur de gaz traversé par l'onde lumineuse dans l'enceinte 10;
- $I_0(k)$ est l'intensité de l'onde lumineuse incidente, à l'instant $k$, qui correspond à l'intensité de l'onde lumineuse, dans la bande spectrale de mesure $\Delta_{20}$, atteignant le photodétecteur de mesure 20 en l'absence de gaz absorbant dans l'enceinte.

La comparaison entre $I(k)$ et $I_0(k)$, prenant la forme d'un ratio $\frac{I(k)}{I_0(k)}$, permet de définir une absorption $abs(k)$ générée par l'espèce gazeuse considérée à l'instant $k$.

Lors de chaque impulsion de la source de lumière 11, on peut ainsi déterminer $\mu(c_x(k))$, ce qui permet d'estimer $c_x(k)$ sachant que la relation entre $c_x(k)$ et $\mu(c_x(k))$ est connue.

L'expression (1) suppose une maîtrise de l'intensité $I_0(k)$ de l'onde lumineuse incidente 12 à l'instant de mesure $k$.

La figure 1B schématise un spectre d'émission d'une source de lumière 11 de type corps noir, obéissant à la loi de Planck :

$$L(\lambda, T) = \frac{2hc^2}{\lambda^5} \frac{1}{e^{\frac{hc}{\lambda k T}} - 1} \quad (2)$$

où

- $L(\lambda, T)$ est la luminance, dépendant de la longueur d'onde $\lambda$ et de la température de surface $T$ du corps noir,
- $h$ est la constante de Planck,
- $k$ est la constante de Boltzmann,
- $c$ est la vitesse de la lumière dans l'air.

Le spectre d'émission $S$ de la source de lumière 11 correspond à l'évolution de la luminance $L(\lambda, T)$ en fonction de $\lambda$, lorsque la source de lumière est portée à une température $T$. Généralement, la température $T$ est comprise entre 400°C et 800 °C.

On a représenté, sur la figure 1B, la bande spectrale d'illumination $\Delta_{12}$, de la source de lumière 11 s'étendant entre 1 $\mu$m et 10 $\mu$m. On a également représenté, par un trait en pointillés, la bande spectrale de référence $\Delta_{ref}$.

Ce type de source de lumière est particulièrement avantageux, car cela permet de moduler le spectre d'illumination $S$ par une simple modulation de la température $T$ de la source. Ainsi, à chaque température $T$ est associé un spectre d'illumination $S$.

Il est connu que l'émissivité d'une source de lumière de type corps noir ou corps gris, varie avec le temps, et peut notamment subir une décroissance résultant du vieillissement de la source de lumière. La variation temporelle de l'émission de la source de lumière 11 est prise en compte par le photodétecteur de référence $20_{ref}$. Ce dernier est agencé pour détecter une onde lumineuse de référence $12_{ref}$, représentative de l'onde lumineuse incidente 12 émise par la source de lumière 11. L'onde lumineuse de référence $12_{ref}$ atteint le photodétecteur de référence $20_{ref}$ sans interagir avec le gaz G, ou sans interagir significativement avec ce dernier. L'intensité de l'onde lumineuse de référence $12_{ref}$, détectée par le photodétecteur de référence $20_{ref}$ à l'instant de mesure $k$, est désignée par le terme intensité de référence $I_{ref}(k)$. A partir de $I_{ref}(k)$, connaissant le spectre d'émission de la source de lumière 11, on peut estimer l'intensité $\hat{I}_0(k)$ de l'onde lumineuse qui atteindrait le photodétecteur de mesure 20 en l'absence de gaz $G$. L'intensité de référence peut également permettre de corriger l'intensité de mesure $I(k)$ pour prendre en compte le vieillissement de la source de lumière 11.

Le dispositif comporte un microprocesseur 30, relié à une mémoire 32 comportant des instructions permettant la mise en oeuvre des étapes de procédé décrites ci-dessous.

Selon un premier mode de réalisation, le microprocesseur 30 est configuré pour recevoir un signal représentatif de l'intensité $I_{ref}(k)$ de l'onde lumineuse de référence $12_{ref}$, mesurée par le photodétecteur de référence $20_{ref}$ à chaque instant de mesure $k$. Le microprocesseur 30 estime l'intensité $\hat{I}_0(k)$ à partir de $I_{ref}(k)$.

A partir de $I(k)$, on peut estimer l'absorption de l'onde lumineuse incidente selon l'expression :

$$abs(k) = 1 - \frac{I(k)}{\hat{I}_0(k)} \quad (3).$$

En utilisant l'expression (1), on obtient alors $\mu(c_x(k))$, puis $c_x(k)$.

Selon un deuxième mode de réalisation, le microprocesseur 30 est configuré pour recevoir un signal représentatif de l'intensité de référence $I_{ref}(k)$, puis pour effectuer une correction de l'intensité mesurée $I(k)$. L'intensité corrigée est notée $I^*(k)$. Cette dernière correspond à l'intensité qui serait mesurée par le photodétecteur de mesure sans le vieillissement de la source de lumière. L'absorption $abs(k)$ de l'onde lumineuse incidente peut alors être obtenue par l'expression :

$$abs(k) = 1 - \frac{I^*(k)}{I_0(k=0)} \quad (4),$$

où $I_0(k = 0)$ représente l'onde lumineuse incidente au photodétecteur de mesure, sans gaz absorbant dans l'enceinte, lors de l'instant de mesure initial $k = 0$, c'est-à-dire lorsque la source de lumière 11 est considérée comme neuve. En utilisant l'expression (1), on obtient alors $\mu(c_x(k))$, puis $c_x(k)$.

Il est usuellement considéré que le ratio entre l'émissivité de la source de lumière 11, respectivement dans la bande spectrale de référence $\Delta_{ref}$ et dans la bande spectrale de mesure $\Delta_{20}$ décroît de la même façon. Selon une telle hypothèse :

- lorsqu'on met en oeuvre le premier mode de réalisation, l'intensité $\hat{I}_0(k)$ est simplement estimée à partir de $I_{ref}(k)$ à partir de la connaissance du spectre théorique d'émission de la source de lumière, ou selon une expression de type

$$\hat{I}_0(k) = I_{ref}(k) \frac{I_0(k=0)}{I_{ref}(k=0)} \quad (5);$$

- lorsqu'on met en oeuvre le deuxième mode de réalisation, l'intensité corrigée $I^*(k)$ est obtenue par à partir de $I_{ref}(k)$, en appliquant une fonction de correction :

$$I^*(k) = \frac{I_{ref}(k=0)}{I_{ref}(k)} I(k) \quad (6).$$

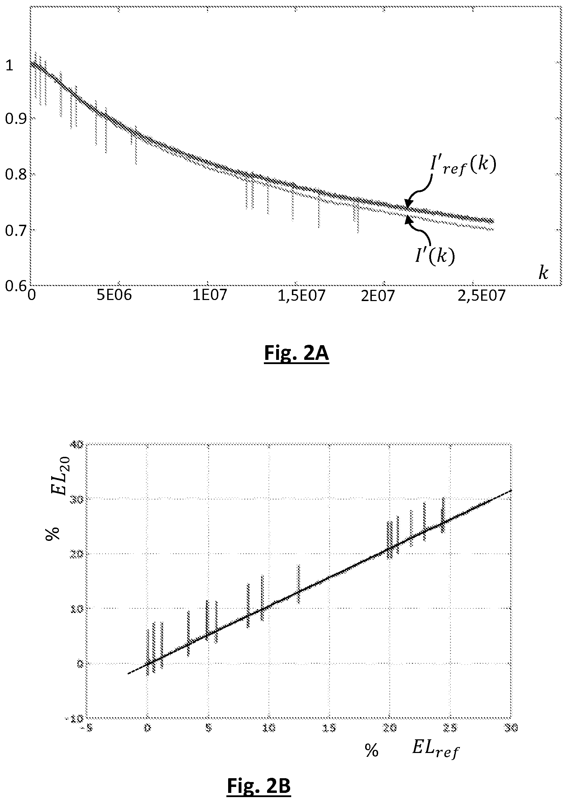

Cependant, l'inventeur a constaté que le vieillissement de la source de lumière 11 affecte différemment la bande spectrale de référence $\Delta_{ref}$ et la bande spectrale de mesure $\Delta_{20}$. Contrairement à ce qui est suggéré dans le document FR3000548, le vieillissement dans la bande spectrale de mesure ne peut être considéré comme similaire au vieillissement dans la bande spectrale de référence. Pour cela, l'inventeur a effectué une calibration expérimentale décrite en lien avec les figures 2A à 2C. Il a utilisé un capteur de mesure de test 20' et un capteur de référence de test $20'_{ref}$ respectivement similaires aux capteurs de mesure et de référence décrits en lien avec la figure 1A. Durant la calibration, le gaz analysé était un gaz connu, en l'occurrence $CO_2$ selon une concentration de 400 ppm. Les paramètres expérimentaux étaient les suivants :

- Filtre de mesure 18 : filtre Heimann F4.26-180, centré sur une longueur d'onde de 4.26 $\mu$m.
- Filtre de référence $18_{ref}$ : filtre Heimann F3.91-90, centré sur une longueur d'onde de 3.91 $\mu$m.
- Photodétecteurs de mesure 20 et de référence $20_{ref}$ : thermopile Heimann HCM Cx2 Fx.

Dans cet essai, le filtre de mesure 18 définit une bande spectrale de mesure $\Delta_{20}$ volontairement étroite, de façon à bien mettre en évidence le vieillissement observé par l'inventeur. On comprend que l'invention s'applique à d'autres bandes spectrales de mesures $\Delta_{20}$, en particulier plus larges que la bande spectrale de référence $\Delta_{ref}$.

Une source de lumière de test 11', similaire à la source de lumière de décrite en lien avec la figure 1A, a été activée de façon impulsionnelle à différents instants $k$, entre un instant de calibration initial $k = 0$ et un instant de calibration final $k = K$. Chaque impulsion durait 300 ms, et était espacée de l'impulsion suivante par un intervalle temporel de 300 ms. Environ 26 millions d'impulsions ont été effectuées. La figure 2A représente les évolutions temporelles :

- d'une intensité de mesure $I'(k)$, mesurée par le photodétecteur de mesure de test 20' dans la bande spectrale de mesure $\Delta_{20}$ ;
- de l'intensité de référence $I'_{ref}(k)$, mesurée par le photodétecteur de référence de test $20'_{ref}$ dans la bande spectrale de référence $\Delta_{ref}$.

Ces évolutions sont respectivement normalisées par l'intensité de mesure et l'intensité de référence à l'instant de calibration initial ($k = 0$).

Les notations $I'(k)$ et $I'_{ref}(k)$ désignent le fait que ces intensités sont mesurées au cours d'une phase de calibration, à l'aide de capteurs de test, et d'une source de lumière de test,
en utilisant un gaz connu. La phase de calibration permet d'apprendre le vieillissement de la source de lumière 11, qui est de la même nature que la source de lumière de test 11'.

Les fluctuations observées sur chaque courbe correspondent à des variations temporaires, et intentionnelles, de la concentration en $CO_2$.

On observe qu'au cours de la calibration, l'intensité de mesure $I'(k)$ et l'intensité de référence $I'_{ref}(k)$ décroissent avec le temps, ce qui était attendu. Cela correspond au vieillissement de la source de lumière 11. On observe également que les décroissances respectives dans la bande spectrale de mesure $\Delta_{20}$ et dans la bande spectrale de référence $\Delta_{ref}$ sont différentes. Cela signifie que le vieillissement de la source de lumière 11 dans la bande spectrale de mesure $\Delta_{20}$ est différent du vieillissement de la source de lumière 11 dans la bande spectrale de référence $\Delta_{ref}$. Ainsi, le ratio $\dfrac{I'(k)}{I'_{ref}(k)}$ varie en fonction du temps $k$. Cela signifie que le vieillissement de la source de lumière 11 s'accompagne d'une légère modification du spectre d'émission.

La figure 2B montre la perte d'émissivité $EL_{20}$ dans la bande spectrale de mesure (axe des ordonnées) en fonction de la perte d'émissivité dans la bande spectrale de référence $EL_{ref}$ (axe des abscisses). Les pertes d'émissivité, exprimées en %, dans chaque bande spectrale sont respectivement obtenues à chaque instant $k$ selon les expressions :

$$EL_{ref}(k) = \frac{I'_{ref}(k=0) - I'_{ref}(k)}{I'_{ref}(k=0)} \times 100 \quad (7)$$

et

$$EL_{20}(k) = \frac{I'(k=0) - I'(k)}{I'(k=0)} \times 100 \quad (8)$$

Les fluctuations de la courbe de la figure 2B correspondent à des variations temporaires de la concentration en $CO_2$, telles qu'évoquées en lien avec la figure 2A. On observe que $EL_{20}$ évolue de façon linéaire en fonction de $EL_{ref}$, selon une pente $A$ supérieure à 1. On a tracé, sur la figure 2B, la courbe $EL_{20} = EL_{ref}$, en pointillés.

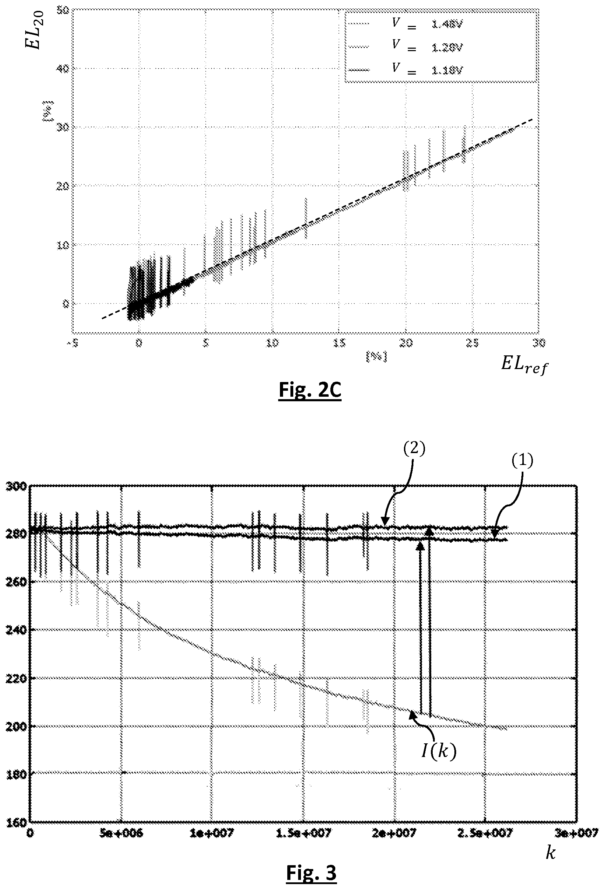

Un essai similaire a été effectué en faisant varier le potentiel d'alimentation $V$ de la source de lumière 11. Trois photodétecteurs identiques ont été utilisés, respectivement face à trois sources de lumière de même type, dont le potentiel était respectivement $V = 1.48$ V, ce qui correspond au potentiel auquel était portée la source de lumière lors de l'essai reporté sur la figure 2B, $V = 1.28$ V, et $V = 1.18$ V. La figure 2C représente les courbes $EL_{20}$ en fonction de $EL_{ref}$ respectivement pour chaque potentiel $V$. Lorsque le potentiel diminue, la perte d'émissivité est moins importante qu'à potentiel élevé, car le vieillissement de la source de lumière 11 est moins marqué. On observe cependant que les trois courbes se superposent. L'effet du vieillissement sur les émissions dans la bande spectrale de mesure $\Delta_{20}$ et dans la bande spectrale de référence $\Delta_{ref}$ semble donc indépendant du potentiel auquel est porté la source de lumière 11.

L'essai décrit en lien avec les figures 2A à 2C peut être considéré comme un essai de calibration, durant lequel on apprend le vieillissement différentiel de la source de lumière 11 dans la bande spectrale de mesure $\Delta_{20}$ par rapport à la bande spectrale de référence $\Delta_{ref}$. Il est effectué avec un capteur de test, dont les composants sont similaires à ceux équipant le capteur destiné à l'analyse d'un gaz inconnu.

Cet essai de calibration permet de déterminer une fonction de correction $\delta$ caractérisant la variation d'émissivité relativement dans les deux bandes spectrales $\Delta_{20}$ et $\Delta_{ref}$. La fonction de correction $\delta$ comporte une comparaison, en chaque instant $k$, de l'intensité de référence avec l'intensité dans la bande spectrale de mesure.

Selon une première approche, la fonction de correction $\delta$ peut être telle que :

$$I^*(k) = \delta\big(I(k)\big) = \frac{I(k)}{1-A\times\frac{EL_{ref}(k)}{100}} = \frac{I(k)}{1-A\times\frac{I_{ref}(k=0)-I_{ref}(k)}{I_{ref}(k=0)}}\ (9)$$

A est la pente d'une droite obtenue en appliquant une régression linéaire à partir des données représentées sur les figures 2B et 2C. $A$ est une valeur scalaire, représentant le vieillissement différentiel de la source de lumière dans chaque bande spectrale.

Sur la figure 3, on a représenté un exemple d'évolution temporelle d'une intensité de mesure I(k). Cette évolution correspond à celle mesurée sur la figure 2A. Deux corrections du signal de mesure I(k) ont été représentées sur la figure 3 :

- une première correction (courbe 1) correspondant à l'art antérieur, en appliquant un facteur correctif constant à *I(k),* de telle sorte que

$$I^*(k) = \frac{I_{ref}(k=0)}{I_{ref}(k)}I(k)\ (6).$$

- une deuxième correction (courbe 2), correspondant à une mise en oeuvre de l'invention, en appliquant la fonction de correction $\delta$, variable en fonction du temps, à $I_{ref}(k),$ de telle sorte que de telle sorte que :

$$I^*(k) = \delta\big(I(k)\big) = \frac{I(k)}{1-A\times\frac{EL_{ref}(k)}{100}} = \frac{I(k)}{1-A\times\frac{I_{ref}(k=0)-I_{ref}(k)}{I_{ref}(k=0)}}(10)$$

On a estimé la dérive $\varepsilon(K)$ affectant, à l'instant $K,$ les corrections de I(k), lors des essais réalisés avec $V = 1.48$ V, et représentées sur la figure 3. La dérive $\varepsilon(K)$ est exprimée en % selon l'expression :

$$\varepsilon(K) = \frac{I(k=0)-I^*(K)}{I(k=0)} \times 100\ (12)$$

On observe :

- qu'en appliquant la première correction, selon l'expression (6), la valeur de $\varepsilon(K)$ est de 1.34% ;
- qu'en appliquant la deuxième correction, selon l'expression (10), la valeur de $\varepsilon(K)$ est de 0.08%.

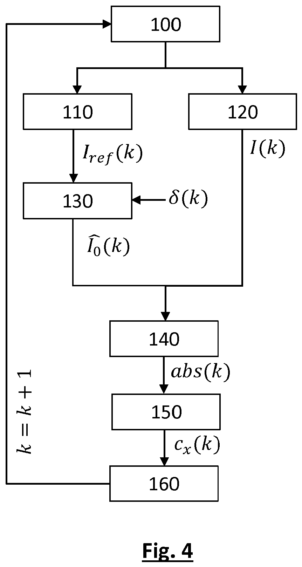

La figure 4 montre les principales étapes d'un procédé de mesure mettant en oeuvre l'invention. Etape 100 : illumination du gaz à un instant $k$ ;

Etape 110 : mesure de l'intensité de référence $I_{ref}(k),$ dans la bande spectrale de référence $\Delta_{ref}$, par le photodétecteur de référence $20_{ref}$.

Etape 120 : mesure de l'intensité I(k) du rayonnement 14 transmis par le gaz, dans la bande spectrale de mesure $\Delta_{20}$, par le photodétecteur de mesure 20.

Etape 130 : estimation d'une intensité $\hat{I}_0(k)$ qui serait détectée par le photodétecteur de mesure 14, dans la bande spectrale de mesure $\Delta_{20}$, en l'absence de gaz dans l'enceinte. L'estimation est effectuée en prenant en compte la fonction de correction $\delta(k)$, et en appliquant l'expression :

$$\hat{I}_0(k) = \delta\big(I_{ref}(k)\big) = \hat{I}_0(k=0)\left(1 - A \times \frac{EL_{ref}(k)}{100}\right) = \hat{I}_0(k=0)\left(1 - A \times \frac{I_{ref}(k=0) - I_{ref}(k)}{I_{ref}(k=0)}\right)$$

(13). $\hat{I}_0(k=0)$ correspond à l'estimation de l'intensité $\hat{I}_0(k)$ à $k = 0$.

Etape 140 : estimation d'une absorption $abs(k) = 1 - \frac{I(k)}{\hat{I}_0(k)}$ dans la bande spectrale de mesure $\Delta_{20}$.

Etape 150 : à partir de l'absorption, estimation d'une quantité $c_x(k)$ d'une espèce gazeuse $G_x$ à partir du ratio en appliquant l'expression (1).

Etape 160 : réitération des étapes 100 à 150, en incrémentant l'instant de mesure $k$, ou sortie de l'algorithme.

Ce mode de réalisation est avantageux car suite à la calibration, seule la valeur du vieillissement différentiel $A$ est à retenir, de façon à pouvoir appliquer la fonction de correction $\delta$ à chaque mesure de l'intensité de référence $I_{ref}(k)$ mesurée à chaque instant de mesure $k$.

Il est possible de considérer d'autres expressions de la fonction de correction $\delta$. Par exemple, la fonction de correction $\delta$ peut être telle que

$$\delta(k) = \frac{\frac{I'_{ref}(k)}{I'_{ref}(k=0)}}{\frac{I'(k)}{I'(k=0)}} \,(14)$$

Lors de l'étape 130, l'estimation de $\hat{I}_0(k)$ est alors obtenue par

$$\hat{I}_0(k) = \delta(k) I_{ref}(k) \frac{I(k=0)}{I_{ref}(k=0)} \quad (15).$$

Selon une variante, au cours de l'étape 130, on corrige la valeur $I(k)$ de l'intensité mesurée par le capteur de mesure, en prenant en compte la fonction de correction $\delta$. On obtient une intensité corrigée $I^*(k)$. La fonction de correction

$$I^*(k) = \delta\big(I(k)\big) = \frac{I(k)}{1 - A \times \frac{EL_{ref}(k)}{100}} = \frac{I(k)}{1 - A \times \frac{I_{ref}(k=0) - I_{ref}(k)}{I_{ref}(k=0)}} .$$

$\delta$ peut être exprimée selon l'expression (9), telle que
Elle peut également être exprimée selon l'expression (14), auquel cas

$$I^*(k) = \delta(k) I(k) \frac{I_{ref}(k=0)}{I_{ref}(k)}. \,(16)$$

Selon cette variante, au cours de l'étape 140, l'absorption est obtenue selon l'expression :

$$abs(k) = 1 - \frac{I^*(k)}{I_0(k=0)} \,(17).$$

Ainsi, d'une façon générale, la phase de calibration permet d'évaluer la décroissance relative, dans le temps, de l'intensité du rayonnement d'illumination produit par la source de lumière dans la bande spectrale de référence et la bande spectrale de mesure. La fonction de correction comporte une comparaison de la décroissance dans chaque bande spectrale. Le recours à la fonction de correction $\delta(k)$ permet de prendre en compte la variation de la décroissance de l'intensité du rayonnement d'illumination 12 dans les deux bandes spectrales, de façon à obtenir

- une estimation de l'intensité $\hat{I}_0(k)$ qui serait mesurée par le photodétecteur de mesure en l'absence de gaz ;
- ou une intensité corrigée $I^*(k)$ qui serait mesurée par le photodétecteur de mesure sans le vieillissement de la source de lumière.

L'invention pourra être mise en oeuvre pour la détection d'une quantité d'espèces gazeuses $G_x$ dont le spectre d'absorption $\Delta_{20}$ est compris dans la bande spectrale de mesure $\Delta_{20}$. Cette dernière peut être étroite, comme dans l'exemple expérimental décrit ci-avant. Elle peut également être large, de façon à inclure, par exemple, les bandes spectrales d'absorption $\Delta_x$ de plusieurs espèces gazeuses différentes.

**Revendications**

1. Procédé de mesure d'une quantité ($c_x$) d'une espèce gazeuse ($G_x$) présente dans un gaz, l'espèce gazeuse étant apte à absorber une lumière dans une bande spectrale d'absorption ($\Delta_x$),

   le procédé comportant les étapes suivantes :

   a) disposition du gaz entre une source de lumière (11) et un photodétecteur de mesure (20), la source de lumière (11) étant apte à émettre une onde lumineuse incidente (12), l'onde lumineuse incidente se propageant à travers le gaz vers le photodétecteur de mesure (20) ;
   b) illumination du gaz ($G$) par la source de lumière (11) ;
   c) mesure, par le photodétecteur de mesure (20), d'une intensité ($I(k)$), dite intensité de mesure, d'une onde lumineuse (14) transmise par le gaz, dans une bande spectrale de mesure ($\Delta_{20}$), comportant la bande spectrale d'absorption ($\Delta_x$);
   d) mesure, par un photodétecteur de référence ($20_{ref}$), d'une intensité ($I_{ref}(k)$), dite intensité de référence, d'une onde lumineuse ($12_{ref}$) de référence, l'onde lumineuse de référence étant émise par la source de lumière (11) dans une bande spectrale de référence ($\Delta_{ref}$);

   les étapes b) à d) étant mises en oeuvre à une pluralité d'instants de mesure ($1 ... k ... K$), le procédé comportant, à chaque instant de mesure :

   e) à partir de l'intensité de référence ($I_{ref}(k)$) mesurée par le photodétecteur de référence ($20_{ref}$). et de l'intensité de mesure ($I(k)$) mesurée par le photodétecteur de mesure (20), estimation d'une absorption ($abs(k)$) de l'onde lumineuse incidente (12) par le gaz ;
   f) estimation d'une quantité ($c_x(k)$) de l'espèce gazeuse ($G_x$), à partir de l'absorption estimée lors de l'étape e) ;

   dans lequel l'étape e) comporte une prise en compte d'une fonction de correction ($\delta$), représentative d'une variation temporelle d'une intensité de l'onde lumineuse incidente (12) dans la bande spectrale de mesure ($\Delta_{20}$) relativement à une intensité de l'onde lumineuse incidente (12) dans la bande spectrale de référence ($\Delta_{ref}$) ; le procédé étant **caractérisé en ce que** la fonction de correction ($\delta$) est préalablement établie au cours d'une phase de calibration, comportant les étapes suivantes :

   cal-i) disposition d'une source de lumière de test (11'), face à un photodétecteur de mesure de test (20'), et face à un photodétecteur de référence de test ($20'_{ref}$), la source de lumière de test (11'), le photodétecteur de mesure de test (20') et le photodétecteur de référence de test ($20'_{ref}$) étant respectivement représentatifs de la source de lumière (11), du photodétecteur de mesure (20) et du photodétecteur de référence ($20_{ref}$);
   cal-ii) illumination du photodétecteur de mesure de test (20') et du photodétecteur de référence de test ($20'_{ref}$) par la source de lumière de test (11'), durant des instants de calibration s'étendant selon une période de calibration ;
   cal-iii) comparaison d'une évolution temporelle de l'intensité ($I'(k)$) détectée par le photodétecteur de mesure de test (20'), dans la bande spectrale de mesure ($\Delta_{20}$), avec une évolution temporelle de l'intensité ($I'_{ref}(k)$) détectée par le photodétecteur de référence de test ($20'_{ref}$), dans la bande spectrale de référence ($\Delta_{ref}$).

2. Procédé selon la revendication 1, dans lequel la fonction de correction ($\delta(k)$) est représentative d'une comparaison entre :

   - l'intensité de l'onde lumineuse incidente (12), dans la bande spectrale de mesure ($\Delta_{20}$);
   - l'intensité de l'onde lumineuse incidente (12), dans la bande spectrale de référence ($\Delta_{ref}$);

   la comparaison prenant des valeurs différentes à différents instants de mesure.

3. Procédé selon l'une quelconque des revendications précédentes, dans lequel la source de lumière de test (11') est impulsionnelle, à chaque impulsion correspondant un instant de calibration, la période de calibration comportant au moins $10^3$ instants de calibration.

4. Procédé selon l'une quelconque des revendications précédentes, dans lequel la fonction de correction ($\delta$) est établie à partir d'une comparaison, en différents instants de calibration, entre:

- l'intensité ($I'(k)$) détectée par le photodétecteur de mesure de test ($20'_{ref}$), normalisée par une intensité initiale détectée par le photodétecteur de mesure de test ($I'(k = 0)$);
- l'intensité détectée par le photodétecteur de référence de test ($I'_{ref}(k)$), normalisée par une intensité initiale détectée par le photodétecteur de référence de test ($I'_{ref}(k = 0)$);

5. Procédé selon l'une quelconque des revendications précédentes, dans lequel l'étape e) comporte, à partir de l'intensité de référence ($I_{ref}(k)$) mesurée à l'instant de mesure ($k$) et de la fonction de correction ($\delta$), une estimation d'une intensité ($\hat{I}_0(k)$) qui serait détectée, à l'instant de mesure ($k$), par le photodétecteur de mesure (14), dans la bande spectrale de mesure ($\Delta_{20}$), en l'absence de gaz.

6. Procédé selon l'une quelconque des revendications précédentes, dans lequel l'étape e) comporte, à partir de l'intensité de référence ($I_{ref}(k)$) mesurée à l'instant de mesure ($k$) et de la fonction de correction ($\delta$), une correction de l'intensité de mesure, l'intensité de mesure corrigée ($I^*(k)$) correspondant à une intensité de mesure en l'absence de vieillissement de la source de lumière.

7. Dispositif (1) pour déterminer une quantité ($c_x(k)$) d'une espèce gazeuse ($G_x$) dans un gaz ($G$), le dispositif comportant :

- une source lumineuse (11) configurée pour émettre une onde lumineuse incidente (12) se propageant vers le gaz ($G$), l'onde lumineuse incidente s'étendant dans une bande spectrale d'absorption ($\Delta_x$) de l'espèce gazeuse ($G_x$);
- un photodétecteur de mesure (20), configuré pour détecter une onde lumineuse transmise (14) par le gaz, à différents instants de mesure ($k$), dans une bande spectrale de mesure et à en mesurer une intensité ($I(k)$), dite intensité de mesure;
- un photodétecteur de référence ($20_{ref}$), configuré pour mesurer une intensité ($I_{ref}(k)$), dite intensité de référence, d'une onde lumineuse de référence ($12_{ref}$) émise par la source de lumière (11), dans une bande spectrale de référence, aux différents instants de mesure ($k$);
- un processeur (30), programmé pour mettre en oeuvre les étapes e) et f) d'un procédé selon l'une quelconque des revendications précédentes, à partir de l'intensité de référence ($I_{ref}(k)$) et de l'intensité de mesure ($I(k)$).

**Patentansprüche**

1. Verfahren zur Messung einer Menge ($c_x$) einer Gasspezies ($G_x$), die in einem Gas vorhanden ist, wobei die Gasspezies geeignet ist, ein Licht in einem Absorptionsspektralband ($\Delta_x$) zu absorbieren, wobei das Verfahren die folgenden Schritte aufweist:

a) Anordnen des Gases zwischen einer Lichtquelle (11) und einem Messphotodetektor (20), wobei die Lichtquelle (11) geeignet ist, eine einfallende Lichtwelle (12) zu emittieren, wobei sich die einfallende Lichtwelle durch das Gas zum Messphotodetektor (20) hin ausbreitet;
b) Beleuchten des Gases ($G$) durch die Lichtquelle (11);
c) Messen, durch den Messphotodetektor (20), einer Messstärke ($I(k)$) einer durch das Gas übertragenen Lichtwelle (14) in einem Messspektralband ($\Delta_{20}$), das das Absorptionsspektralband ($\Delta_x$) aufweist;
d) Messen einer Referenzstärke ($I_{ref}(k)$) einer Referenzlichtwelle ($12_{ref}$) durch einen Referenzphotodetektor ($20_{ref}$), wobei die Referenzlichtwelle von der Lichtquelle (11) in einem Referenzspektralband ($\Delta_{ref}$) emittiert wird; wobei die Schritte b) bis d) zu mehreren Messzeitpunkten ($1 \dots k \dots K$) durchgeführt werden, wobei das Verfahren bei jedem Messzeitpunkt Folgendes aufweist:

e) Schätzen einer Absorption ($abs(k)$) der einfallenden Lichtwelle (12) durch das Gas anhand der Referenzstärke ($I_{ref}(k)$), die vom Referenzphotodetektor ($20_{ref}$) gemessen wird, und der Messstärke ($I(k)$), die vom Messphotodetektor (20) gemessen wird;
f) Schätzen einer Menge ($c_x(k)$) der Gasspezies ($G_x$) anhand der Absorption, die beim Schritt e) geschätzt wird;

wobei der Schritt e) eine Berücksichtigung einer Korrekturfunktion ($\delta$) aufweist, die für eine zeitlichen Variation einer Stärke der einfallenden Lichtwelle (12) in einem Messspektralband ($\Delta_{20}$) in Bezug auf eine Stärke der einfallenden Lichtwelle (12) im Referenzspektralband ($\Delta_{ref}$) repräsentativ ist;

wobei das Verfahren **dadurch gekennzeichnet ist, dass** die Korrekturfunktion ($\delta$) zuvor im Verlauf einer Kalibrierungsphase hergestellt wird, die die folgenden Schritte aufweist:

cal-i) Anordnen einer Testlichtquelle (11') gegenüber einem Test-Messphotodetektor (20') und gegenüber einem Test-Referenzphotodetektor ($20'_{ref}$), wobei die Testlichtquelle (11'), der Test-Messphotodetektor (20') und der Test-Referenzphotodetektor ($20'_{ref}$) für die Lichtquelle (11), den Messphotodetektor (20) bzw. den Referenzphotodetektor ($20_{ref}$) repräsentativ sind;

cal-ii) Beleuchten des Test-Messphotodetektors (20') und des Test-Referenzphotodetektors ($20'_{ref}$) durch die Testlichtquelle (11') während Kalibrierungszeitpunkten, die sich über eine Kalibrierungsperiode erstrecken;

cal-iii) Vergleichen einer zeitlichen Entwicklung der Stärke ($I'(k)$), die vom Test-Messphotodetektor (20') im Messspektralband ($\Delta_{20}$) detektiert wird, mit einer zeitlichen Entwicklung der Stärke ($I'_{ref}(k)$), die vom Test-Referenzphotodetektor ($20'_{ref}$) im Referenzspektralband ($\Delta_{ref}$) detektiert wird.

2. Verfahren nach Anspruch 1, wobei die Korrekturfunktion ($\delta(k)$) für einen Vergleich zwischen Folgendem repräsentativ ist:

- der Stärke der einfallenden Lichtwelle (12) im Messspektralband ($\Delta_{20}$);
- der Stärke der einfallenden Lichtwelle (12) im Referenzspektralband ($\Delta_{ref}$);

wobei der Vergleich zu verschiedenen Messzeitpunkten verschiedene Werte annimmt.

3. Verfahren nach einem der vorhergehenden Ansprüche, wobei die Testlichtquelle (11') gepulst ist, wobei jedem Impuls ein Kalibrierungszeitpunkt entspricht, wobei die Kalibrierungsperiode wenigstens $10^3$ Kalibrierungszeitpunkte aufweist.

4. Verfahren nach einem der vorhergehenden Ansprüche, wobei die Korrekturfunktion ($\delta$) anhand eines Vergleichs, zu verschiedenen Kalibrierungszeitpunkten, zwischen Folgendem hergestellt wird:

- der Stärke ($I'(k)$), die vom Test-Messphotodetektor ($20'_{ref}$) detektiert wird, normalisiert durch eine Anfangsstärke, die vom Test-Messphotodetektor detektiert wird ($I'(k = 0)$);
- der Stärke, die vom Test-Referenzphotodetektor detektiert wird ($I'_{ref}(k)$), normalisiert durch eine Anfangsstärke, die vom Test-Referenzphotodetektor detektiert wird ($I'_{ref}(k = 0)$).

5. Verfahren nach einem der vorhergehenden Ansprüche, wobei der Schritt e) ausgehend von der Referenzstärke ($I_{ref}(k)$), die zum Messzeitpunkt ($k$) gemessen wird, und der Korrekturfunktion ($\delta$), eine Schätzung einer Stärke ($\hat{I}_0(k)$) aufweist, die zum Messzeitpunkt ($k$) durch den Messphotodetektor (14) im Messspektralband ($\Delta_{20}$) bei Nichtvorhandensein von Gas detektiert würde.

6. Verfahren nach einem der vorhergehenden Ansprüche, wobei der Schritt e) ausgehend von der Referenzstärke ($I_{ref}(k)$), die zum Messzeitpunkt ($k$) gemessen wird, und der Korrekturfunktion ($\delta$), eine Korrektur der Messstärke aufweist, wobei die korrigierte Messstärke ($I^*(k)$) einer Messstärke bei Nichtvorhandensein von Alterung der Lichtquelle entspricht.

7. Vorrichtung (1) zur Bestimmung einer Menge ($c_x(k)$) einer Gasspezies ($G_x$) in einem Gas ($G$), die Vorrichtung aufweisend:

- eine Lichtquelle (11), die angeordnet ist, eine einfallende Lichtwelle (12) zu emittieren, die sich zum Gas ($G$) hin ausbreitet, wobei sich die einfallende Lichtwelle in einem Absorptionsspektralband ($\Delta_x$) der Gasspezies ($G_x$) erstreckt;
- einen Messphotodetektor (20), der dazu ausgebildet ist, eine durch das Gas übertragene Lichtwelle (14) zu verschiedenen Messzeitpunkten ($k$) in einem Messspektralband zu detektieren und davon eine Messstärke ($I(k)$) zu messen;

- einen Referenzphotodetektor ($20_{ref}$), der zum Messen einer Referenzstärke ($I_{ref}(k)$) einer Referenzlichtwelle ($12_{ref}$) ausgebildet ist, die von der Lichtquelle (11) in einem Referenzspektralband zu den verschiedenen Messzeitpunkten ($k$) emittiert wird;
- einen Prozessor (30), der dafür programmiert ist, die Schritte e) und f) eines Verfahrens nach einem der vorhergehenden Ansprüche ausgehend von der Referenzstärke ($I_{ref}(k)$) und der Messstärke ($I(k)$) durchzuführen.

**Claims**

1. Method for measuring an amount ($c_x$) of a gaseous species ($G_x$) present in a gas, the gaseous species being able to absorb light in an absorption spectral band ($\Delta_x$), the method comprising the following steps:

   a) placing the gas between a light source (11) and a measurement photodetector (20), the light source (11) being able to emit an incident light wave (12), the incident light wave propagating through the gas to the measurement photodetector (20);
   b) illuminating the gas ($G$) with the light source (11);
   c) measuring, with the measurement photodetector (20), an intensity ($I(k)$), called the measurement intensity, of a light wave (14) transmitted by the gas, in a measurement spectral band ($\Delta_{20}$), containing the absorption spectral band ($\Delta_x$);
   d) measuring, with a reference photodetector ($20_{ref}$), an intensity ($I_{ref}(k)$), called the reference intensity, of a reference light wave ($12_{ref}$), the reference light wave being emitted by the light source (11) in a reference spectral band ($\Delta_{ref}$);

   steps b) to d) being carried out at a plurality of measurement times ($1 ... k ... K$), the method comprising, at each measurement time:

   e) on the basis of the reference intensity ($I_{ref}(k)$) measured by the reference photodetector ($20_{ref}$), and of the measurement intensity ($I(k)$) measured by the measurement photodetector (20), estimating an absorption ($abs(k)$) of the incident light wave (12) by the gas;
   f) estimating an amount ($c_x(k)$) of the gaseous species ($G_x$), on the basis of the absorption estimated in step e);
   in which step e) comprises taking into account a correction function ($\delta$), representative of a temporal variation in an intensity of the incident light wave (12) in the measurement spectral band ($\Delta_{20}$) relative to an intensity of the incident light wave (12) in the reference spectral band ($\Delta_{ref}$);
   the method being **characterized in that** the correction function ($\delta$) is established beforehand in a calibration phase, comprising the following steps:

   cal-i) placing a test light source (11'), facing a measurement test photodetector (20'), and facing a reference test photodetector ($20'_{ref}$), the test light source (11'), the measurement test photodetector (20') and the reference test photodetector ($20'_{ref}$) being representative of the light source (11), of the measurement photodetector (20) and of the reference photodetector ($20_{ref}$), respectively;
   cal-ii) illuminating the measurement test photodetector (20') and the reference test photodetector ($20'_{ref}$) with the test light source (11'), during calibration times lying in a calibration period;
   cal-iii) comparing a temporal variation in the intensity ($I'(k)$) detected by the measurement test photodetector (20'), in the measurement spectral band ($\Delta_{20}$), with a temporal variation in the intensity ($I'_{ref}(k)$) detected by the reference test photodetector ($20'_{ref}$), in the reference spectral band ($\Delta_{ref}$).

2. Method according to Claim 1, wherein the correction function ($\delta(k)$) is representative of a comparison between:

   - the intensity of the incident light wave (12), in the measurement spectral band ($\Delta 20$);
   - the intensity of the incident light wave (12), in the reference spectral band ($\Delta_{ref}$); the comparison taking different values at various measurement times.

3. Method according to any one of the preceding claims, wherein the test light source (11') is pulsed, one calibration time corresponding to each pulse, the calibration period containing at least $10^3$ calibration times.

4. Method according to any one of the preceding claims, wherein the correction function ($\delta$) is established on the basis of a comparison, at various calibration times, between:

- the intensity ($I'(k)$) detected by the measurement test photodetector ($20'_{ref}$), normalized by an initial intensity ($I'(k = 0)$) detected by the measurement test photodetector;
- the intensity ($I'_{ref}(k)$) detected by the reference test photodetector, normalized by an initial intensity ($I'_{ref}(k = 0)$) detected by the reference test photodetector.

5. Method according to any one of the preceding claims, wherein step e) comprises, on the basis of the reference intensity ($I_{ref}(k)$) measured at the measurement time ($k$) and of the correction function ($\delta$), estimating an intensity ($\hat{I}_0(k)$) that would be detected, at the measurement time ($k$), by the measurement photodetector (14), in the measurement spectral band ($\Delta_{20}$), in the absence of gas.

6. Method according to any one of the preceding claims, wherein step e) comprises, on the basis of the reference intensity ($I_{ref}(k)$) measured at the measurement time ($k$) and of the correction function ($\delta$), correcting the measurement intensity, the corrected measurement intensity ($I^*(k)$) corresponding to a measurement intensity in the absence of aging of the light source.

7. Device (1) for determining an amount ($c_x(k)$) of a gaseous species ($G_x$) in a gas ($G$), the device comprising:

- a light source (11) configured to emit an incident light wave (12) that propagates to the gas ($G$), the incident light wave lying in an absorption spectral band ($\Delta_x$) of the gaseous species ($G_x$);
- a measurement photodetector (20), configured to detect a light wave (14) transmitted by the gas, at various measurement times ($k$), in a measurement spectral band and to measure an intensity ($I(k)$) thereof, called the measurement intensity;
- a reference photodetector ($20_{ref}$), configured to measure an intensity ($I_{ref}(k)$), called the reference intensity, of a reference light wave ($12_{ref}$) emitted by the light source (11), in a reference spectral band, at the various measurement times ($k$);
- a processor (30), for implementing steps e) and f) of a method according to any one of the preceding claims, on the basis of the reference intensity ($I_{ref}(k)$) and of the measurement intensity ($I(k)$).

**Fig. 1A**

**Fig. 1B**

**Fig. 2A**

**Fig. 2B**

**Fig. 2C**

**Fig. 3**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5026992 A
- WO 2007064370 A2
- US 20110042570 A1
- FR 3000548 A1
- FR 3000548